# EUROPEAN PATENT SPECIFICATION

(11) **EP 3 190 594 B1**
(45) Date of publication and mention of the grant of the patent: **08.11.2023**
(21) Application number: 17151007.6
(22) Date of filing: 11.01.2017
(51) Int. Cl.: H02G 3/00

(54) **PREASSEMBLED ELECTRICAL WIRING ASSEMBLY FOR A BUILDING**
VORMONTIERTER ELEKTRISCHER DRAHTSATZ FÜR EIN GEBÄUDE
ENSEMBLE CÂBLAGE ÉLECTRIQUE PRÉASSEMBLÉ D'UN BÂTIMENT

(30) Priority: 11.01.2016 NL 2016078
(43) Date of publication of application: 12.07.2017
(73) Proprietor: Pipelife Nederland B.V., 1601 MA Enkhuizen (NL)
(72) Inventor: Lichtenberg, Josephus Joannes Norbertus, 1601 MA Enkhuizen (NL); Lawant, Jeroen, 1601 MA Enkhuizen (NL); Linde, Leo, 1601 MA Enkhuizen (NL); Verschuur, Patrick, 1601 MA Enkhuizen (NL); Venema, Erik, 1601 MA Enkhuizen (NL); Faber, Linde, 1601 MA Enkhuizen (NL); Zonneveld, Ton, 1601 MA Enkhuizen (NL); Bakker, Mark, 1601 MA Enkhuizen (NL)
(74) Representative: van Breda, Jacobus

(56) References cited:
- FR-A5- 2 053 463
- GB-A- 809 563
- GB-A- 851 420
- JP-A- H08 275 352
- US-A- 3 792 190

## Description

### FIELD OF THE INVENTION

The present invention relates to a box of a preassembled and predetermined electrical wiring assembly in a roll, said electrical wiring assembly arranged for a building for transferring electrical power from one point in a building to a next point where electrical power is used, comprising at least one main cable, the main cable comprising one or more primary junctions, and wherein cables are made of a flexible material, each assembly forming at least one separate electrical group, wherein electrically attached to each junction is at least one primary side cable. In addition the present invention provides a method for installing an assembly from such a box.

### BACKGROUND OF THE INVENTION

In general construction of buildings and houses is characterized in that a builder and specifically an installer can not finish building or installing in one go. It is typical that a first floor is built, than an installer installs conducts, creates provisions like drilling and milling openings and slits, than a next floor is built, and so on. Next plasterers and tilers finish wall, floor and ceiling surfaces in which all the conducts are covered and then again the installers appear on site to pull wiring into the conduct system and to install sockets and switches, to connect wiring to a meter cupboard, to make welds in welding boxes, and finally to place armatures. Conducts are in view of both process of installation and physical form integrated and interwoven with building constructions, such that an installer needs to visit a building site at least several times for contributing his share to a building or a house, or the like.

Due to (further) fragmentation of the work into smaller parts, and typically relating to unwanted smaller parts, the work becomes less efficient and more costly. In addition these smaller work parts may typically relate to involving less than a day work, such as only a few hours. So a skilled person can only work a few hours per day, at the best, in such situations.

Apart from the above inefficiency for the installer and the inflexibility of the building such is also not a sustainable way of operating, especially since production of concrete and the like attributes significantly to the carbon dioxide loading of the atmosphere; in an initial building phase, possibly up to completion, an amount of concrete could resemble a typical amount, but due to inflexibility and waste produced as a consequence an amount of concrete is likely to be higher. During use of such a building, after leaving the building as well as during demolition much more waste is produced than is considered necessary.

The term "building" is used in the present description to relate to a physical construction for living (a house, an apartment, a cottage), for working, for producing, for sports, and for activities, with walls, a roof, and having one or more floors.

From the above it is clear that an installer can not finish his work in one go, or likewise in a limited number (less than 10) of larger sub-parts of the work. The term "installer" may refer anyone who is involved in building and constructing installations in a building, such as by installing conducts, such as an electrician, a plumber, etc. In fact each installer is forced, by the building process, to align his work with the status of construction of the building and to be present again and again either to do his work such as by placing conducts, or to prepare next steps/phases in his work, such as by making slits for future conducts.

Prior art building techniques rely largely on milling of slits and incorporating conducts, though developments have been evolved relating to supporting the building process, limiting the number of times an installer has to come to a building site for installing and to making a building more flexible in terms of future uses. Known developments relate to special conduct floors, such as Infra+ or slimline floors, so-called Wing-floors, and the so-called VBI-conduct floor. Likewise wall elements are used having a hollow core or hollow tube openings, possibly in combination with hollow plinth systems. The idea here is to incorporate conducts during a building process or later on into such elements. Examples of such products are the so-called Cable-stud wall and the Faay-wall.

An example of a preassembled electrical wiring assembly for wiring a building structure including a factory-assembled wiring harness having a trunk cable portion and a plurality of branch cable portions, each branch cable portion having an electrical terminal device, such as a switch or outlet, permanently electrically secured to the end thereof is provided in US 3,792,190 A. From the description it is not clear of what type of material the cables, housing and junction are made. The wiring harness is placed on a grid-like ceiling module and unrolled longitudinally from one end to the other. It seems such an assembly could not be used for application in more than one building layer. As such the assembly needs to be further connected to a cupboard or the like with a further electrical connection.

US 3 792 190 discloses a method and apparatus for wiring a building structure including a factory-assembled wiring harness having a trunk cable portion and a plurality of branch cable portions, each branch cable portion having an electrical terminal device, such as a switch or outlet, permanently electrically secured to the end thereof. Installation is facilitated by individually packaging the electrical terminal devices and a portion of the branch cable secured thereto in individual plastic bags, and wrapping the entire harness in an elongate plastic envelope which is then rolled up from one end to the other. The wiring harness is placed on a grid-like ceiling module and unrolled longitudinally from one end to the other. The envelope is opened and the individual terminal devices are extended outwardly therefrom and tacked in place and left hanging around the outside of the ceiling module. After the ceiling module is disposed on the walls, the electrical terminal device packages are opened to allow the devices to fall to their full vertical extension and secured in place.

JP H08 275352 discloses an underfloor power distribution system wherein in a branching portion, respective main and branching power cables are connected with each other. In this branching portion, the core wires of respective insulation electric wires are pressure-connected to each other by a solderless terminal, and the periphery thereof is insulated by a resin layer. A wire harness with this configuration is laid along a predetermined route in a wiring space of an underfloor, and the branching portion is positioned in one of the lattice-form intersecting portions of the wiring space. The power cable is passed through the intersecting portion and covered with a branching cover.

GB 809 563 A recites a prefabricated electrical installation which may be completely embedded in concrete or other flooring comprising lengths of flexible conduit joined together by conduit connectors such as elbows or T-pieces with freely enclosed cables, using the "loop-in" system of wiring throughout to avoid joints in the cables, or connection boxes in the body of the installation, the conduit fittings preferably having means such as rollers to facilitate movement of the cables.

FR 2 053 463 discloses a method for the total prefabrication of electrical installations, wherein different junction boots intended to be incorporated into the concrete of a building are connected, said concrete constituting, at least partially, the walls and the ceilings of a dwelling or of a group of dwellings. The junction boots allow connections to the sockets of electric lamps or other lighting appliances, to switches and to sockets by standardized electrical conduits of appropriate length, also incorporated in the said concrete.

GB 851 420 discloses a joint between a main cable having a plurality of insulated cores enclosed, except in the region of the joint, by a continuous sheath of flexible insulating material, and a branch having a plurality of insulated cores each of two of the branch cores, starting from its connection with a main cable core, extends circumferentially of the main cable in the opposite direction to the other of these two branch cores and envelopes the outer side of at least one main cable core, other than that to which it is connected, before passing from the main cable so that tension applied to the branch tends to draw the main cable cores together and is not transmitted directly to the joints between the conductors.

There is a need for an improved and more efficient system and method for installing electrical cables, which overcomes at least some of the drawbacks of the prior art, without jeopardizing functionality and potential advantages thereof.

### SUMMARY OF THE INVENTION

The present invention relates in a first aspect to a box of a preassembled and predetermined electrical wiring assembly with the features of claim 1, and a method according to claim 14. The present assembly is especially suited in building projects with flexible building parts as described above, and also in more traditional environments where a floor is partly or fully poured out onto a supporting structure.

The present assembly is intended for transferring electrical power and optionally information from one point in a building, typically a meter cupboard, to a next point where electrical power is used. In view of a set-up of the meter cupboard each assembly constitutes one separate group, or more than one if more power is required, such as in a kitchen. The above prior art does not relate to such a single group concept. In addition, or alternatively, two or more assemblies may be combined into one electrical group especially if the combined power and/or layout of electricity provision allow such. The assembly can be rolled out and installed on a building location. As such installation of e.g. a building floor can be established in a short period of time, such as within a few hours or sometimes less than one hour. In an example a spider like structure is rolled out on a floor and attached thereto, whereas at the intersect of the floor and a wall the cable can be brought upwards and likewise downwards. The present assembly requires less installation time, has a higher throughput time, makes quicker building possible, is cost effective, and reduces a number of drilling openings therewith preventing fluid leaks which may be important in view of noise and isolation (leak tight building). In the present assembly the junction (12a,12b) comprises a water impermeable and durable material for electrically insulating the junction. As indicated also this material is flexible.

The present assembly is relatively thin and can therefore be incorporated in a cover floor. If a housing is used of sufficient internal size new wiring can be introduced at a later stage. Likewise an assembly could comprise parts only having a housing, i.e. without electrical wires, which hollow housing could be used to introduce cables at a later stage as well.

The assembly comprises a main cable and at least one primary and optionally secondary side cables. For an alternating current each cable typically comprises a first live wire having a phase, and a neutral wire. In addition a ground wire is typically provided. Each wire is typically surrounded by an electrically insulating material, such as an elastomer or rubber. In addition extra wires may be present. Cross-sections are typically in the order of 1.5-6 mm, having a conducting core of typically 1.5-4 mm, e.g. 2.5 mm, and typically an insulator there around, typically depending on a current (A) and voltage (V) applied. Typically a weak current is used for most applications. The wires may be combined or may be separate. In an exemplary embodiment the present assembly is for connecting at least one of low voltage or low power electrical conducts, and high voltage or high power electrical conducts. Typically not-compatible conducts are physically separated from one and another.

The cables may be used and are typically used for transferring power. In addition or as an alternative they may be used for transferring information, such as switching of devices, analogue and digital information, etc. In view of transfer of information further devices may be connected to the present invention, such as transceivers, transmitters, receivers, either directly or wireless. The present cables may also be made of optical fibers, such as glass optical fibers, plastic optical fibers, and so on, in so far as suited for a given purpose, such as data transmission.

Each main cable comprises one or more primary junctions 12a, and attached to each junction at least one primary side cable 13a. At a junction cables are electrically connected. Depending on the desired layout of electrical connections, sensors, etc. in a building at a junction more than one primary side cable may be provided. The spatial layout of the present assembly is predetermined, e.g. based on calculations and modelling of the building.

The cables and thus the present assembly are provided in a housing made of a flexible material, such as a plastic, an elastomer, a rubber. A preferred housing is a so-called flexible tube, such as Kabelflex^{™}. The housing may be hollow and therewith providing space for further wires; in an alternative the housing is provided by the insulating materials of the wires. In view of laying out the present assembly in a building the assembly is made of flexible material, such as plastic, artificial and natural rubbers, and copper or aluminum for the electrical conductors, etc. Some small parts may however be still relatively inflexible. Relatively sharp curves can be made as well as straight stretches, and combinations.

In the present assembly the junction (12a,12b) comprises a water impermeable and durable material for electrically insulating the junction, such as a resin, and a water insoluble gel. These elements, and also a housing and insulation material prevent moisture and water from entering the assembly. If the assembly is incorporated in a cover floor also the cover floor prevents to some extent water from entering. In view of shorts, wear, oxidation, and so on this is required. In addition, when a resin or gel is used the junction may be made in a mold or the like, or welded, before applying the resin or gel. As such a need for weld boxes and the like is absent and the assembly and in particular the junctions can be made much thinner. A further example of such a thin assembly makes use of a so-called flat cable; such a flat cable or likewise a thin assembly is also better protected against mechanical damages. Such is especially an advantage if a cover floor is used to incorporate the present assembly. In addition, if floor heating is used, the present assembly in general and the special junctions can be incorporated together with the floor heating with more ease. Also a cover floor can be made thinner.

As a building typically comprises more than one floor the present assembly may pass a ceiling/floor. The present system relates to a centralized system; it may be a single system, or multiple systems, such as parallel systems. The present assembly is modular, such that it can be extended and adapted to a given situation with ease. The cables used in the assembly may have any length. Typically lengths of 100 cm - 50 m, preferably 2-25 m, more preferably 5-20 m, such as 7-10 m, are used for a main cable and 30 cm- 20 m, preferably 100 cm - 10 m, more preferably 1-5 m, such as 2-4 m, for a side cable.

The present assembly provides an easy adaptable and flexible system, allowing installation in one building process step. Both vertical and horizontal assemblies, and combinations, can be provided. The present assembly uses limited space which is easy accessible.

Thereby the present invention provides a solution to one or more of the above mentioned problems.

Advantages of the present invention are detailed throughout the description.

### DETAILED DESCRIPTION OF THE INVENTION

The present invention relates in a first aspect to an assembly according to claim 1.

The present assembly comprises 3-30 junctions. In addition spare junctions may be provided. In view of a number of wall sockets, appliances, etc. being present in a room 4-25 junctions may be present, preferably 5-20, such as 7-12. In this respect the present assembly is very flexible. A number of junctions may be optimized in view of a required number of cables, a number of present assemblies to be provided to a building, in view of combined cable length, in view of ease of installation, and combinations thereof. It is preferred to use software tools to determine optimal layouts in this respect.

In an exemplary embodiment of the present assembly the housing is one of cylindrical, triangular, ellipsoidal, rectangular, flat, star-formed, multigonal, such as hexagonal, and combinations thereof. The housing may in principle be provided in any suitable form, e.g. in view of cable sizes, cable diameters, number of cables, installation, etc. Depending on the exact location one may (also) vary said cross-sectional shape, or combine various shapes. For instance in a corner a triangular of rectangular shape may be used. In view of production circular shapes may be used. In the assembly of the invention the housing, cable insulators are independently made from plastic, such as PE, PP, PVC, or PPS, or from natural and artificial rubbers, and preferably a material which is free of halogens. An example of conducts is the so-called Kabelflex^{™}. The plastic used may have further characteristics, such as good thermal insulation properties, fire resistance, fire retardation, etc.

In an exemplary embodiment of the present assembly at least one side cable (13) comprises a secondary junction (12b), and wherein at least one secondary side cable (13b) is attached to said secondary junction (12b). Clearly the present assembly can be extended further, e.g. comprising secondary junctions and secondary side cables. The flexibility of the design provides further optimization of the assembly in view of boundary conditions, as indicated above.

In an exemplary embodiment of the present assembly at least one lower order junction is present, and attached to the lower order junction a lower order side cable, such as tertiary junctions and side cables, quaternary junctions and quaternary side cable, etc. The design of the present assembly is in principle very flexible, as indicated above.

In an exemplary embodiment of the present assembly a thickness of the assembly is 0.3-4 cm, preferably 0.5-3cm, such as 1-2 cm. In view of a cover floor a thickness is preferably as small as possible; however, in view of power transfer the thickness may be somewhat thicker, especially in view of power losses at higher currents. Also combinations of thicker and thinner cables and likewise wires may be made. Likewise also thicker and thinner assemblies may be provided, as appropriate in view of boundary conditions.

In an exemplary embodiment the present assembly further comprises at least one RF-controller for controlling an electrical current through a junction (12a,12b). Therewith the current may be controlled in a remote fashion, such as switched on and off, increased or decreased, etc.

In an exemplary embodiment the present assembly further comprises connected to an end of a cable (11,13) at least one of a smoke detector, a carbon monoxide detector, a light connection, a power point, a wall socket, a power socket, a thermostat, RJ data connector or data socket, and a sensor. So usual and optional further elements can be added and connected to the present invention, in great flexibility, variety, and with ease.

The present assembly further comprises a connector (31) for a meter cupboard. Therewith the present assembly can be connected with ease to a meter cupboard or the like.

In an exemplary embodiment the present assembly further comprises at least one actor, preferably a programmable and adaptable actor. The actor may perform functions, such as switching lights on and off, starting equipment, shutting off equipment, increasing or decreasing a temperature by addressing a thermostat or the like, starting or shutting down audio-visual equipment, starting appliances, and so on. The actor may include a transceiver for wireless communication.

In an exemplary embodiment of the present assembly at least one cable is stripped from insulating material at an end section (21) thereof. Therewith direct connection of further elements may be established.

In an exemplary embodiment of the present assembly the housing is stripped at an end section (22) thereof. Therewith extra space is provided for adding and connecting further elements.

In an exemplary embodiment of the present assembly at a junction the cables are welded, soldered, glued with an electrically conductive adhesive, mechanically compressed, temperature welded, and combinations thereof. The junctions may be made at a production site or the like. Welding may be adapted in view of application of the present assembly.

In the assembly of the invention a length of a cable (11,13) is over dimensioned 0.1-5% longer than a pre-calculated shortest distance length between two end points, such as 1-3% longer. Therewith installation flexibility is provided, having in mind that typically some lengths is lost for passing corners, imperfections in the building, slight modifications to a building or layout, late identified changes, etc.

In an exemplary embodiment of the present assembly the housing is in direct contact with the cable. In an example the housing and insulating material of the cables or wires, respectively, may form one housing.

The box of the invention can be relatively small, e.g. 20 liters or less and weighs typically 2-20 kg, hence can be handled with ease and shipped to a building from a production location without any problem. Typically the box is dedicated for a given location; it is therefore preferred to provide further identification means to these, such as a bar code, a two-dimensional code, such as a QR-code, etc.

In another aspect the present invention relates to a method of installing an assembly according to the invention, comprising the steps of providing a building with a floor or ceiling, typically a concrete floor or ceiling, attaching the assembly on the floor or ceiling, connecting the assembly to the meter cupboard, and providing a finishing layer to the floor or ceiling thereby substantially incorporating the assembly. Such is detailed largely above.

In an example of the present method the assembly is attached to the floor or ceiling or wall by hooks, which hooks are forced into the floor or ceiling or wall, or is attached to a part of the floor or ceiling or wall, respectively. The hooks or alternatives thereto provide an easy way of applying and firmly connecting the present assembly.

In an example of the present method the building is made watertight, and thereafter all assemblies are attached in one work stage. Such is exceptional, as typically much more than one work stage, such as 2-5 work stages per floor, are required.

In an example of the present method building information modelling is conducted, and thereafter dimensions of cables are retrieved from the building information modelling. Therewith information already available or made available can be used to further optimize the installation process and to reduce waste and costs.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### EXAMPLES/EXPERIMENTS

The invention although described in detailed explanatory context may be best understood in conjunction with the accompanying examples and figures.

### SUMMARY OF FIGURES

Figure 1 shows a present assembly.
Figure 2 shows a junction of the present assembly.
Figs. 3-4 shows examples of layouts of the present assembly in practice.

### DETAILED DESCRIPTION OF FIGURES

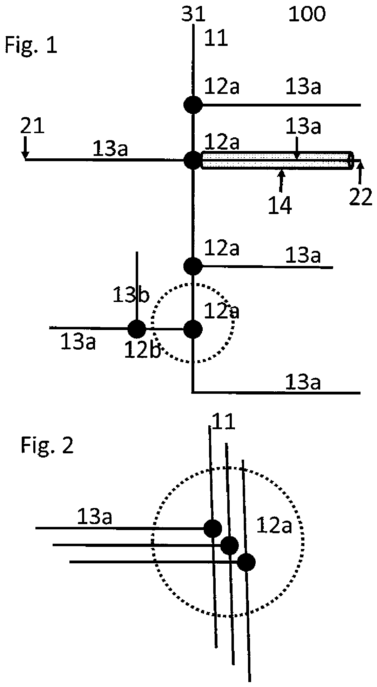

Figure 1 shows an example of the present assembly. Therein a main cable, typically connected at a connector side 31 to a meter cupboard or the like is shown. The main cable has four primary junctions 12a. At each primary junction at least one primary side cable 13a is electrically connected. Some side cables may have a secondary junction 12b to which a secondary side cable 13b is attached. In principle further, lower order (e.g. tertiary, quaternary, etc.) junctions and likewise side cable may be present.

A part of a housing 14 is shown. The housing typically extends over all cables 11,13 and junctions 12. At an end 22 the housing may be partly removed, therewith providing easy access. Likewise the cables may be partly stripped from insulating material at an end thereof. At an end of a cable further elements may be provided, such as connectors, sensors, detectors, etc.

Fig. 2 shows an enlargement of an exemplary junction section of figure 1. The main cable 11 comprises 3 wires and thus three junctions 12a are formed to which side cables 13a are attached.

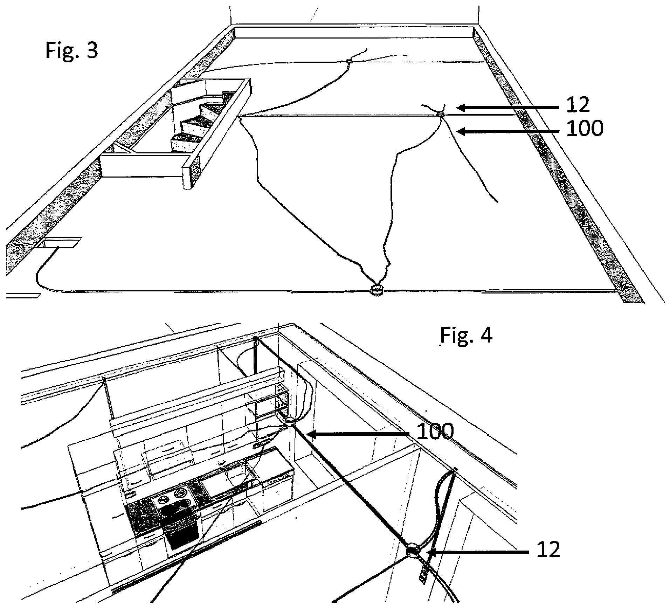

Fig. 3 shows a floor comprising a present assembly laid out over the floor. Various junctions 12 are present, as well as various primary, secondary and tertiary side cables.

Fig. 4 shows a floor comprising two present assemblies laid out over the floor and at least partly directed towards a kitchen located at a lower floor. Various junctions 12 are present, as well as various primary, secondary and tertiary side cables.

In the figures the following items are shown:
- 100: Assembly
- 11: main cable
- 12a: primary junction
- 12b: secondary junction
- 13a: primary side cable
- 13b: secondary side cable
- 14: housing
- 21: end section
- 22: stripped end section
- 31: connector

The invention although described in detailed explanatory context may be best understood in conjunction with the accompanying figures.

## Claims

1. Box comprising a preassembled electrical wiring assembly (100) in a roll, wherein the spatial layout of the electrical wiring assembly (100) is predetermined, said electrical wiring assembly (100) arranged for a building for transferring electrical power from one point in a building to a next point where electrical power is used, comprising
at least one main cable (11), the main cable comprising one or more primary junctions (12a), wherein at least one primary side cable (13a) is electrically attached to each primary junction (12a) and
wherein cables (11, 13a) are made of a flexible material,
each assembly forming at least one separate electrical group, said assembly comprises 3-30 junctions,
**characterized in that** the cables (11, 13a) are provided in a housing (14),
wherein each junction (12a) comprises a water impermeable and durable material for electrically insulating the junction, wherein the water impermeable and durable material for electrically insulating the junction is selected from a resin, and a water insoluble gel,
wherein housing (14) and junctions (12a) are made of a flexible material,
wherein a length of a cable (11, 13a) is over dimensioned, i.e. 0.1 - 5 % longer than a pre-calculated shortest distance length between two end points,
further comprising a connector (31) for a meter cupboard.

2. Box according to claim 1,
wherein the housing is one of cylindrical, triangular, ellipsoidal, rectangular, flat, star-formed, multigonal, such as hexagonal, and combinations thereof.

3. Box according to any of the preceding claims,
wherein at least one side cable (13) comprises a secondary junction (12b), and wherein at least one secondary side cable (13b) is attached to said secondary junction (12b),
optionally wherein at least one lower order junction is present, and attached to the lower order junction a lower order side cable.

4. Box according to any of the preceding claims, wherein a thickness of the assembly is 0.3-4 cm.

5. Box according to any of the preceding claims, wherein at a junction the cables are welded, soldered, glued with an electrically conductive adhesive, mechanically compressed, temperature welded, and combinations thereof.

6. Box according to any of the preceding claims, wherein at least one cable is stripped from insulating material at an end section (21) thereof, and/or
wherein the housing is stripped at an end section (22) thereof.

7. Box according to any of the preceding claims, wherein the housing is in direct contact with the cable.

8. Box according to any of the preceding claims, further comprising at least one RF-controller for controlling an electrical current through a junction (12a,12b).

9. Box according to any of the preceding claims, further comprising connected to an end of a cable (11,13) at least one of a smoke detector, a carbon monoxide detector, a light connection, a power point, a wall socket, a power socket, a thermostat, RJ data connector or data socket, and a sensor.

10. Box according to any of the preceding claims, further comprising at least one actor.

11. Box according to claim 10, wherein the actor is a programmable and adaptable actor.

12. Kit of parts, comprising at least two of an assembly according to any of claims 1 - *11*, an RF-controller for controlling an electrical current through a junction (12a,12b), connected to an end of a cable (11,13) at least one of a smoke detector, a carbon monoxide detector, a light connection, a power point, a wall socket, a power socket, a thermostat, RJ data connector, a data socket, a sensor, a connector (31) for a meter cupboard, and an actor.

13. Box comprising a kit of parts according to claim 12.

14. Method of installing an assembly from a box according to any of claims 1-11, comprising the steps of
providing a building with a floor or ceiling,
attaching the assembly on the floor or ceiling,
connecting the assembly to the meter cupboard, and
providing a finishing layer to the floor or ceiling thereby substantially incorporating the assembly,
and thereafter all assemblies are attached in one work stage.

15. Method according to claim 14, wherein the assembly is attached to the floor or ceiling or wall by hooks, which hooks are forced into the floor or ceiling or wall, or is attached to a part of the floor or ceiling or wall, respectively.

## Patentansprüche

1. Box, die eine vormontierte elektrische Drahtbaugraupe (100) in einer Rolle umfasst, wobei die räumliche Anordnung der elektrischen Drahtbaugruppe (100) vorbestimmt ist, wobei die elektrische Drahtbaugruppe (100) für ein Gebäude angeordnet ist, um elektrische Leistung von einem Punkt in einem Gebäude zu einem nächsten Punkt zu übertragen, an dem die elektrische Leistung verwendet wird, umfassend
mindestens ein Hauptkabel (11),
wobei das Hauptkabel eine oder mehrere primäre Verbindungsstellen (12a) umfasst, wobei mindestens ein primäres Seitenkabel (13a) elektrisch an jeder primären Verbindungsstelle (12a) befestigt ist und wobei die Kabel (11, 13a) aus flexiblem Material sind,
wobei jede Baugruppe mindestens eine getrennte elektrische Gruppe bildet, wobei die Baugruppe 3-30 Verbindungsstellen umfasst, **dadurch gekennzeichnet, dass**
die Kabel (11, 13a) in einem Gehäuse (14) bereitgestellt werden,
wobei jede Verbindungsstelle (12a) ein wasserundurchlässiges und dauerhaftes Material zum elektrischen Isolieren der Verbindungsstelle umfasst, wobei das wasserundurchlässige und dauerhafte Material zum elektrischen Isolieren der Verbindungsstelle ausgewählt ist aus einem Harz, und einem wasserunlöslichen Gel,
wobei das Gehäuse (14) und die Verbindungsstellen (12a) aus einem flexiblen Material sind,
wobei eine Länge eines Kabels (11, 13a) überdimensioniert ist, d.h. 0,1 - 5 % länger als eine vorausberechnete kürzeste Distanzlänge zwischen zwei Endpunkten,
wobei ferner einen Anschluss (31) für einen Verteilerschrank umfasst ist.

2. Box gemäß Anspruch 1, wobei das Gehäuse zylindrisch, dreieckig, ellipsoidisch, rechteckig, flach, sternförmig, mehrkantig beispielsweise sechseckig, oder eine Kombination davon ist.

3. Box gemäß einem der vorhergehenden Ansprüche, wobei mindestens ein Seitenkabel (13) eine sekundäre Verbindungsstelle (12b) umfasst, und wobei mindestens ein sekundäres Seitenkabel (13b) an der sekundären Verbindungsstelle (12b) befestigt ist,
optional, wobei mindestens eine Verbindungsstelle niedrigerer Ordnung vorhanden ist, und an der Verbindungsstelle niedrigerer Ordnung ein Seitenkabel niedrigerer Ordnung befestigt ist.

4. Box gemäß einem der vorhergehenden Ansprüche, wobei eine Dicke der der Baugruppe 0,3-4 cm beträgt.

5. Box gemäß einem der vorhergehenden Ansprüche, wobei die Kabel an einer Verbindungsstelle verschweißt, verlötet, mit einem elektrisch leitenden Klebstoff verklebt, mechanisch komprimiert, temperaturgeschweißt, und Kombinationen davon sind.

6. Box gemäß einem der vorhergehenden Ansprüche, wobei mindestens ein Kabel an einem Endabschnitt (21) von dem isolierenden Material abisoliert ist, und/oder
wobei das Gehäuse an einem Endabschnitt (22) davon ausgeschnitten ist.

7. Box gemäß einem der vorhergehenden Ansprüche, wobei das Gehäuse in direktem Kontakt mit dem Kabel steht.

8. Box gemäß einem der vorhergehenden Ansprüche, ferner umfassend mindestens einen RF-Regler zur Steuerung eines elektrischen Stroms durch eine Verbindungsstelle (12a, 12b).

9. Box gemäß einem der vorhergehende Ansprüche, ferner umfassend mindestens einen Rauchmelder, einen Kohlenmonoxiddetektor, einen Lichtanschluss, einen Stromanschluss, eine Wandsteckdose, eine Stromsteckdose, einen Thermostat, einen RJ-Datenanschluss oder eine Datensteckdose, und einen Sensor, die mit einem Ende eines Kabels (11, 13) verbunden sind.

10. Box gemäß einem der vorhergehenden Ansprüche, ferner umfassend mindestens einen Aktor.

11. Box gemäß Anspruch 10, wobei der Aktor ein programmierbarer und anpassungsfähiger Aktor ist.

12. Teilesatz, umfassend mindestens zwei einer Baugruppe gemäß einem der Ansprüche 1 bis 11, ein RF-Steuergerät zur Steuerung eines elektrischen Stroms durch eine Verbindungsstelle (12a, 12b), mindestens eines aus einem Rauchmelder, einem Kohlenmonoxiddetektor, einem Lichtanschluss, einem Stromanschluss, einer Wandsteckdose, einer Stromsteckdose, einem Thermostat, einem RJ-Datenanschluss, einer Datensteckdose, einem Sensor, einem Anschluss (31) für einen Verteilerschrank, und einem Aktor, die mit einem Ende eines Kabels (11, 13) verbunden sind.

13. Box, umfassend einen Teilesatz gemäß Anspruch 12.

14. Verfahren zum Installieren einer Baugruppe aus einer Box gemäß einem der Ansprüche 1 bis 11, umfassend die Schritte
Bereitstellen eines Gebäudes mit einem Boden oder einer Decke,
Befestigen der Baugruppe am Boden oder an der Decke,
Anschließen der Baugruppe an den Verteilerschrank, und
Bereitstellen einer Abdeckschicht für den Boden oder die Decke, die die Baugruppe im Wesentlichen einschließt,
und danach werden alle Baugruppen in einem Arbeitsgang angebracht.

15. Verfahren gemäß Anspruch 14, wobei die Baugruppe mit Haken am Boden, an der Decke oder an der Wand befestigt wird, wobei die Haken in den Boden, die Decke oder die Wand eingepresst werden, bzw. an einem Teil des Bodens, der Decke oder der Wand befestigt wird.

## Revendications

1. Boîte comprenant un ensemble de câblage électrique préassemblé (100) sous la forme d'un rouleau, dans laquelle la disposition spatiale de l'ensemble de câblage électrique (100) est prédéterminée,
ledit ensemble de câblage électrique (100) étant agencé pour un bâtiment pour le transfert d'énergie électrique d'un point dans un bâtiment à un point suivant où de l'énergie électrique est utilisée,
comprenant
au moins un câble principal (11),
le câble principal comprenant une ou plusieurs jonctions primaires (12a), dans laquelle au moins un câble latéral primaire (13a) est électriquement fixé à chaque jonction primaire (12a) et dans laquelle les câbles (11, 13a) sont constitués d'un matériau flexible,
chaque ensemble formant au moins un groupe électrique séparé,
ledit ensemble comprend de 3 à 30 jonctions,
**caractérisée en ce que**
les câbles (11, 13a) sont ménagés dans un logement (14), dans laquelle chaque jonction (12a) comprend un matériau imperméable à l'eau et durable pour l'isolation électrique de la jonction, dans laquelle le matériau imperméable à l'eau et durable pour l'isolation électrique de la jonction est sélectionné parmi une résine et un gel insoluble dans l'eau,
dans laquelle le logement (14) et les jonctions (12a) sont constitués d'un matériau flexible,
dans laquelle une longueur d'un câble (11, 13a) est surdimensionnée, c'est-à-dire de 0,1 à 5 % plus longue qu'une longueur de distance la plus courte précalculée entre deux points d'extrémité,
comprenant en outre un connecteur (31) pour un placard à compteurs.

2. Boîte selon la revendication 1,
dans laquelle le logement est l'un parmi cylindrique, triangulaire, ellipsoïdal, rectangulaire, plat, en forme d'étoile, polygonal, tel qu'hexagonal, et des combinaisons de ceux-ci.

3. Boîte selon l'une quelconque des revendications précédentes, dans laquelle au moins un câble latéral (13) comprend une jonction secondaire (12b), et dans laquelle au moins un câble latéral secondaire (13b) est fixé à ladite jonction secondaire (12b),
facultativement dans laquelle au moins une jonction d'ordre inférieur est présente, et fixé à la jonction d'ordre inférieur, un câble latéral d'ordre inférieur.

4. Boîte selon l'une quelconque des revendications précédentes, dans laquelle l'épaisseur de l'ensemble est de 0,3 à 4 cm.

5. Boîte selon l'une quelconque des revendications précédentes, dans laquelle, au niveau d'une jonction, les câbles sont soudés, brasés, collés avec un adhésif électriquement conducteur, mécaniquement comprimés, soudés en température, et des combinaisons de ceux-ci.

6. Boîte selon l'une quelconque des revendications précédentes, dans laquelle au moins un câble est dénudé de matériau isolant à une section d'extrémité (21) de celui-ci, et/ou
dans laquelle le logement est dénudé à une section d'extrémité (22) de celui-ci.

7. Boîte selon l'une quelconque des revendications précédentes, dans laquelle le logement est en contact direct avec le câble.

8. Boîte selon l'une quelconque des revendications précédentes, comprenant en outre au moins un régulateur RF pour la régulation d'un courant électrique traversant une jonction (12a, 12b).

9. Boîte selon l'une quelconque des revendications précédentes, comprenant en outre, connecté(e) à une extrémité d'un câble (11, 13), au moins l'un parmi un détecteur de fumée, un détecteur de monoxyde de carbone, une connexion lumineuse, un point d'alimentation, une prise murale, une prise d'alimentation, un thermostat, un connecteur de données RJ ou une prise de données, et un capteur.

10. Boîte selon l'une quelconque des revendications précédentes, comprenant en outre au moins un acteur.

11. Boîte selon la revendication 10, dans laquelle l'acteur est un acteur programmable et adaptable.

12. Kit de pièces, comprenant au moins deux parmi un ensemble selon l'une quelconque des revendications 1 à 11, un régulateur RF pour la régulation d'un courant électrique traversant une jonction (12a, 12b), connecté(e) à une extrémité d'un câble (11, 13), au moins l'un parmi un détecteur de fumée, un détecteur de monoxyde de carbone, une connexion lumineuse, un point d'alimentation, une prise murale, une prise d'alimentation, un thermostat, un connecteur de données RJ, une prise de données, un capteur, un connecteur (31) pour un placard à compteurs, et un acteur.

13. Boîte comprenant un kit de pièces selon la revendication 12.

14. Procédé d'installation d'un ensemble à partir d'une boîte selon l'une quelconque des revendications 1 à 11, comprenant les étapes de
la fourniture, à un bâtiment, d'un plancher ou d'un plafond,
la fixation de l'ensemble sur le plancher ou le plafond,
la connexion de l'ensemble au placard à compteurs, et
la fourniture d'une couche de finition sur le plancher ou le plafond pour ainsi incorporer sensiblement l'ensemble,
et par la suite, tous les ensembles sont fixés en une seule étape de travail.

15. Procédé selon la revendication 14, dans lequel l'ensemble est fixé au plancher ou au plafond ou au mur par des crochets, lesquels crochets sont insérés en force dans le plancher ou le plafond ou le mur, ou est fixé à une partie du plancher ou du plafond ou du mur, respectivement.
